# EUROPEAN PATENT SPECIFICATION

(11) **EP 2 981 414 B1**
(45) Date of publication and mention of the grant of the patent: **28.12.2022**
(21) Application number: 14780102.1
(22) Date of filing: 02.04.2014
(51) Int. Cl.: B32B 27/08, B32B 27/30, B32B 27/32

(54) **MULTILAYER POLYMER STRUCTURES**
MEHRSCHICHTIGE POLYMERSTRUKTUREN
STRUCTURES POLYMÈRES MULTICOUCHES

(30) Priority: 03.04.2013 US 201361807916 P
(43) Date of publication of application: 10.02.2016
(73) Proprietor: Trinseo Europe GmbH, 8810 Horgen (CH)
(72) Inventor: CRABB, Charles, C., Royersford, PA 19468 (US); MEHLMANN, Florence, Berwyn, PA 19312 (US); RICHARDS, Thomas, H., New Britain, PA 18932 (US); RISSEL, Charles, W., New Hope, PA 18938 (US)
(74) Representative: SSM Sandmair
(86) International application number: PCT/US2014/032609
(87) International publication number: WO 2014/165558

(56) References cited:
- EP-A1- 2 216 172
- WO-A1-2013/025739
- US-A- 5 389 178
- US-A1- 2007 167 569
- US-B1- 6 187 501
- US-B1- 6 333 086

## Description

### FIELD OF THE INVENTION

The invention relates to a multi-layer polymer structure having a polyolefin-based layer, an acrylic-based or other polar polymer layer, and a tie-layer between and adjacent to the polyolefin and polar polymer-based layers. Each layer could contain multiple sub-layers. The invention specifically relates to the composition of the tie-layer used to bond the polyolefin and the polar polymer layers together. The multilayer structure can contain more than three layers, with polar polymer layers on each side of the polyolefin-based layer, and can be made by any method known to the art. The multilayer structure exhibits excellent structural integrity, excellent surface appearance, high impact strength, high scratch resistance, and excellent resistance to UV radiation.

### BACKGROUND OF THE INVENTION

Multi-layered polymeric structures are useful to take advantage of the properties of the different polymers. Multi-layer structures (or sheets) are found in parts used in many industries, including automotive; communications such as telephones, radio, TV, cassettes, etc.; power tools; appliances; business machines; toys; furniture; medical devices, building and construction, etc.. When preparing multilayer structures, the layers of the structures must adhere securely to each other. If the layers of the structure do not adhere to each other a special adhesive or, in other cases, a tie layer may be used to join the layers of the multilayer structure together.

The multilayer structures of the invention may be produced by any methods available in the art, such as by co-extrusion techniques, lamination techniques, thermoforming, injection molding, blow molding, or any combination thereof. Co-extrusion is a process in which two or more molten polymeric compositions are simultaneously extruded through a feedblock die or, alternatively, through a multi-manifold die, to form a laminar structure with different functional properties in each layer. A feedblock die can be used to feed a multi-manifold die in a single process, to provide excellent flexibility in the manufacture of the multilayer structures. Lamination is the process of bonding together prefabricated sheet or film layers, or prefabricated and extruded sheet or film layers, by the use of adhesives, or by a combination of heat and pressure. Alternatively, hot melt lamination or thermal lamination brings two or more molten polymer layers together outside the extrusion die, usually at a nip roll or at the top roll of a roll stack.

Multilayer structures formed by blends of different polymer compositions are known in the prior art. Examples of such multilayer structures include those disclosed in U.S. Pat. Nos. 5,264,280, 5,374,680 and 5,385,781. Generally speaking, these patent references disclose multilayer structures comprising olefinic core layers and cap layers comprising polymers of vinyl aromatic compounds such as polystyrene.

Polyolefin substrate layers, and especially thermoplastic polyolefin (TPO), capped with an acrylic layer provide an excellent combination of the strength and low-cost value of a TPO with the weatherable and appealing appearance of an acrylic cap layer. Unfortunately, non-polar TPO and polar acrylics do not adhere well to each other, and a tie layer must be found that can adhere these layers together. US 6,455,171, US 6,420,050, and US 2008/0220274 disclose multilayer structures which provide the physical properties of an olefinic core layer and the scratch and chemical resistive properties of an acrylic cap layer. The tie layers disclosed are either an olefin acrylate copolymer, or a block copolymer of vinyl aromatic monomer with aliphatic conjugated diene, partially hydrogenated diene, or olefin monomer. US 7,740,951 discloses a olefin-based substrate, an acrylic cap layer, and a tie layer using a blend of a styrenic block copolymer with a vinyl cyanide-containing compound.

Specific epoxy-functionalized polyolefin-acrylate copolymers have also been described as tie-layers providing good adhesion to both olefin and acrylic layers, (US 6,455,171, US 6,420,050, and US 2008/0220274), however the presence of gels in these types of materials resulted in a structure with unacceptable surface appearance.

WO2013025739 describes tie-layers comprising a blend of two polymers or oligomers and tie-layers comprising high impact polystyrene, olefinic (co)polymers grafted with anhydride moieties, and copolymers of olefin and (meth)acrylic acid. The described tie-layers are said to provide good adhesion to both a polyolefin-based layer and a polar polymer-based layer. The document US 6,187,501 discloses an imaging member with a tough binder layer. The imaging member is a paper with several polymer layers, including polyolefin (polyethylene and polypropylene) comprising layers, binder layers based on polyester and cellulose based paper.

The tie-layers of the prior art describe adhesion as measured by a peel test under ambient conditions. However, most applications require good overall adhesion of in-service parts in a wide range of stress conditions as well as temperatures and relative humidity. In general, the tie-layers described in the prior art are elastomeric materials exhibiting a low modulus, and result in failed performance in complex stress environments, e.g. shear, or at higher temperatures and varying humidity. Surprisingly, it has been found that select tie-layer compositions having high modulus provide good overall adhesion to both a polyolefin-based layer and a polar polymer-based layer, over a wide range of stress conditions, temperatures and relative humidity.

### SUMMARY OF THE INVENTION

The invention relates to a multi-layer thermoformable structure comprising
a) at least one polyolefin-based layer,
b) at least one polar polymer-based layer, and
c) at least one tie layer having a tensile modulus, measured by ASTM D638 (Type I dogbone) at ambient temperature of greater than 300 MPa, where the tie layer is directly adjacent and adhering to, and in between the polyolefin-based layer and the polar polymer-based layer.

In particular the invention relates to the multi-layer thermoformable structure according to claim 1.

The invention further relates to a process for forming said multi-layer thermoformable structure according to claim 5.

### DETAILED DESCRIPTION OF THE INVENTION

The invention relates to a multi-layer polymer structure having a polyolefin-based layer, a polar polymer-based layer, and a tie-layer having a high modulus. The multilayer structure contains three or more layers, and can be made by any method known to the art. The multilayer structure can have any given geometry, including but not limited to, a flat sheet, a rod, or a profile. The multilayer structure exhibits excellent structural integrity, excellent surface appearance, high impact strength, high scratch resistance, and excellent resistance to UV radiation.

As used herein, unless otherwise noted, all percentages are given as weight percentages, and all molecular weights are weight average molecular weights as measured by GPC.

### POLYOLEFIN-BASED LAYER

The polyolefin-based layer, herein also referred to as a substrate layer, is thicker than the acrylic based layer(s) and tie layer(s) combined. It could contain one or more different polyolefin layers. The polyolefin layer may also exist over another substrate layer, provided the polyolefin layer will be in direct contact with the tie layer. The polyolefins employed in the semicrystalline or crystallizable olefin polymers can be homopolymers, copolymers, terpolymers, or mixtures thereof, etc., containing one or more olefin monomeric units. In a polyolefin-based layer, the polyolefins are generally present in an amount from 30 to 100% by weight, preferably at least 55%, and more preferably at least 60% by weight. The polyolefin of this invention excludes cyclic olefin copolymer (COCs).

Polymers of alpha-olefins or 1-olefins are preferred in the present invention, and these alpha-olefins may contain from 2 to about 20 carbon atoms. Alpha-olefins containing 2 to about 6 carbon atoms are preferred. Thus, the olefin polymers may be derived from olefins such as ethylene, propylene, 1-butene, 1-pentene, 4-methyl-1-pentene, 1-octene, 1-decene, 4-ethyl-1-hexene, etc. Examples of polyolefins include polypropylene, polyethylene, and ethylene propylene copolymers.

In one embodiment, the polyolefins include polypropylene and ethylene-propylene polymers. Propylene polymers may be semi-crystalline or crystalline in structure. The number average molecular weight of the propylene polymers is preferably above about 10,000 and more preferably above about 50,000 as measured by gel permeation chromatography. In addition, it is preferred in one embodiment that the apparent crystalline melting point be above about 75°C. and preferably between about 75° C. and about 250° C. The propylene polymers useful in the present invention are well-known to those skilled in the art and many are available commercially. Thermoplastic polyolefins (TPO) are a preferred substrate layer.

In one embodiment, the multilayer structure of the invention contains two or more substrate layers.

### POLAR POLYMER-BASED LAYER

The multilayer structure of this invention contains at least one polar polymer layer. Polar polymer layer polymers is selected from the group consisting of acrylic-based polymers, styrenic-based polymers, polyesters, polycarbonate, polyvinylidene fluoride, and thermoplastic polyurethane (TPU), or compatible mixtures thereof. Preferred polar layer polymers are styrenic-based, and acrylic-based polymers.

The acrylic-based layer comprises an acrylic polymer. "Acrylic polymer" as used herein is meant to include polymers, copolymers and terpolymers formed from alkyl methacrylate and alkyl acrylate monomers, and mixtures thereof. The alkyl methacrylate monomer is preferably methyl methacrylate, which may make up from 50 to 100 percent of the monomer mixture. 0 to 50 percent of other acrylate and methacrylate monomers or other ethylenically unsaturated monomers, included but not limited to, styrene, alpha methyl styrene, acrylonitrile, and crosslinkers at low levels may also be present in the monomer mixture. Suitable acrylate and methacrylate comonomers include, but are not limited to, methyl acrylate, ethyl acrylate and ethyl methacrylate, butyl acrylate and butyl methacrylate, iso-octyl methacrylate and acrylate, lauryl acrylate and lauryl methacrylate, stearyl acrylate and stearyl methacrylate, isobornyl acrylate and methacrylate, methoxy ethyl acrylate and methacrylate, 2-ethoxy ethyl acrylate and methacrylate, dimethylamino ethyl acrylate and methacrylate monomers. Alkyl (meth) acrylic acids such as methacrylic acid and acrylic acid can be useful for the monomer mixture. Most preferably the acrylic polymer is a copolymer having 70 - 99.5 weight percent of methyl methacrylate units and from 0.5 to 30 weight percent of one or more C₁₋₈ straight or branched alkyl acrylate units.

In one embodiment, the acrylic polymer has a weight average molecular weight of between 50,000 and 500,000 g/mol, and preferably from 75,000 and 150,000, as measured by gel permeation chromatography. The molecular weight distribution of the acrylic polymer may be monomodal, or multimodal with a polydispersity index greater than 1.5.

In one embodiment, the acrylic polymer contains at least 20% of butyl methacrylate comonomer. In another embodiment, the acrylic-based layer is a blend of an acrylic polymer and 5 to 80 wt%, preferably 10 to 40 wt%, of a polyvinylidene fluoride polymer or copolymer.

Styrenic-based polymers include, but are not limited to, polystyrene, high-impact polystyrene (HIPS), acrylonitrile-butadiene-styrene (ABS) copolymers, acrylonitrile-styrene-acrylate (ASA) copolymers, styrene acrylonitrile (SAN) copolymers, methacrylate-acrylonitrile-butadiene-styrene (MABS) copolymers, styrene-butadiene copolymers, styrene-butadiene-styrene block (SBS) copolymers and their partially or fully hydrogenenated derivatives, styrene-isoprene copolymers, styrene-isoprene-styrene (SIS) block copolymers and their partially or fully hydrogenenated derivatives, styrene-maleic anhydride copolymers (SMA), and styrene-(meth)acrylate copolymers such as styrene-methyl methacrylate copolymers (S/MMA). A preferred styrenic polymer is ASA. The styrenic polymers of the invention can be manufactured by means known in the art, including emulsion polymerization, solution polymerization, and suspension polymerization. Styrenic copolymers of the invention have a styrene content of at least 10 percent by weight, preferably at least 25 percent by weight.

In one embodiment, the polar polymer has a weight average molecular weight of between 50,000 and 500,000 g/mol, and preferably from 75,000 and 150,000 g/mol, as measured by gel permeation chromatography (GPC). The molecular weight distribution of the acrylic polymer may be monomodal, or multimodal with a polydispersity index greater than 1.5.

The polar polymer layer may be used as a capstock layer over a polyolefin-based layer, adhered by the tie layer.

In one embodiment, the multilayer structure of the invention contains two or more polar polymer layers, and two or more tie layers, such as a five- layer structure of polar polymer/tie layer/polyolefin-based polymer/tie layer/polar polymer. In a structure in which multiple polar polymer layers and/or multiple tie layers are used in layers non-adjacent to each other, each of the polar polymer-based layers and tie layers can be of the same of different compositions, though in a preferred embodiment the multiple polar polymer and tie layers are the same. In another embodiment, the polar polymer layer may be composed of two or more polar polymer layers directly in contact with each other. The polar polymer layer may further have thin layers of polymer adhered on the side away from the tie layer and polyolefin-based substrate layer. The thin protective layer could include another polar polymer layer containing higher levels of additives, such as UV radiation blockers. The thin protective layer could also be a fluoropolymer, such as a polyvinylidene fluoride layer, or a blend of polyvinylidene fluoride and an acrylic polymer.

### TIE LAYER

The tie layers of the invention have a tensile modulus as measured by ASTM D638 (Type I dogbone) at ambient temperature, of greater than 300 MPa, more preferably greater than 350 MPa, even more preferably greater than 400 MPa, more preferably greater than 500 MPa, and most preferably greater than 500 MPa. The tie layer has the required high modulus, and that the tie layer effectively adhere to the polyolefin-based substrate and polar polymer layer.

In one embodiment, the tie layer may consist of two or more adjacent layers, with each layer having the required high modulus.

"Oligomer" as used herein, is meant to include organic molecules with a weight average molecular weight of 200 g/mol to 20,000 g/mol, as measured by gel permeation chromatrography. "Polymer" as used herein, is meant to include organic molecules with a weight average molecular weight higher than 20,000 g/mol, preferably higher than 50,000 g/mol, as measured by gel permeation chromatrography. Styrenic block copolymers, as used herein, are meant to include block copolymers of vinyl aromatic monomer with aliphatic conjugated diene which can be partially or fully hydrogenated diene and where the dienes can be functionalized.

The tie layer comprises a blend of a styrenic block copolymer with a styrenic polymer, and said tie layer does not comprise a blend of a styrenic block copolymer with a vinyl cyanide-containing compound.

The tie-layer compositions can also include an olefin acrylate copolymer, olefin acetate copolymer, olefinic (co)polymers grafted with anhydride moities, copolymer of olefin and (meth)acrylic acid which can be partially or fully in the salt form, styrenic block copolymer, blends of A) one or more polymers selected from the groups of olefin acrylate copolymer, olefin acetate copolymer, olefinic (co)polymers grafted with anhydride moities, copolymer of olefin and (meth)acrylic acid which can be partially or fully in the salt form, styrenic block copolymer, with B) one or more polymers or oligomers, selected from polyolefins, olefin acrylate copolymers, polydienes, polyesters, acrylics, and styrenics, which can contain functional moieties such as epoxy, carboxylic acid, carboxylate, amine, siloxane, silicone, urethane, amide, anhydride.

When a tie-layer comprises a copolymer of olefin and methacrylic acid which can be partially or fully in a salt form, the salt cation is preferably selected from the group of, sodium, potassium, calcium, zinc, lithium. magnesium and barium.

The olefin acrylate copolymer of the tie-layer composition can be made by any method known in the art, including but not limited to high pressure autoclaves and tubular reactors, and can have homogeneous or heterogeneous distributions of compositions and molecular weights.

In one embodiment, the tie-layer composition comprises a blend of styrenic block copolymers having less than about 50 weight% bound vinyl aromatic monomer and block copolymers having greater than about 60 weight% bound vinyl aromatic monomer.

In another embodiment, the tie-layer composition comprises a blend of styrenic block copolymers having a non-hydrogenated or partially hydrogenated bound diene monomer, and block copolymers having a mostly hydrogenated or fully hydrogenated bound diene monomer.

In one embodiment, having a polyolefin in the tie layer, the polyolefin represents less than 50% of the tie layer composition. Polyolefin, as used herein, is meant to include homopolymers, copolymers, and terpolymers of one or more olefinic monomeric units, including, but not limited to ethylene, propylene, butene, pentene, octene, decene. Examples of polyolefins are polypropylene, polyethylene, and an ethylene-propylene copolymer.

The acrylic or styrenic polymer of B) can be the same or different from the acrylic or styrenic polymer in one of the polar polymer-based layers. Preferably the weight average molecular weight of the polar polymer composition in the tie layer will be equal to or less than the molecular weight of the acrylic in the acrylic-based layer.

The olefin acrylate copolymer of A) can be made by any method known in the art, including but not limited to high pressure autoclaves and tubular reactors, and can have a homogeneous or heterogeneous distribution of compositions and molecular weights.

In one embodiment, the tie-layer composition comprises a blend of A) one or more block copolymers of vinyl aromatic monomer with aliphatic conjugated diene which can be partially or fully hydrogenated diene and where the dienes can be functionalized, and B) one or more styrenic-based polymers. Preferred styrenic-based polymers are styrene-maleic anhydride copolymers (SMA), and styrene-(meth)acrylate copolymers such as styrene-methyl methacrylate.

In one embodiment, B) is an aliphatic polyester, such as polylactic acid.

In another embodiment, B) is an acrylic polymer, preferably an acrylic polymer with a weight average molecular weight lower than 200,000 g/mol, more preferably lower than 100,000 g/mol, and most preferably lower than 80,000 g/mol.

In another embodiment, B) is a polymeric or oligomeric material than contains covalently bonded functional moieties. Functional moieties include, but are not limited to, epoxy, carboxylic acid, carboxylates, anhydride, amide, siloxane, silicone, urethane, and amino groups. The average weight molecular weight of this material is preferably lower than 20,000 g/mol, more preferably lower than 10,000 g/mol.

In another embodiment, B) is an oligomer of (meth)acrylate and / or styrene, copolymerized with a glycidyl (meth)acrylate or a (meth)acrylic acid monomer (e.g. JONCRYL from BASF).

The functionalized oligomers are intended to be materials that improve adhesion without being too volatile. Functional oligomers include, for example, an epoxidized C₁₈ olefin.

The ratio of A) to B) in the blend is from 20 - 95 weight percent of A), and preferably 30-85 weight percent, to respectively 5 - 80 weight percent B) and preferably 15 to 70 wt percent.

The above polar polymer-based layers, polyolefin-based layers and tie layers may contain one or more impact modifiers, fillers or fibers, or other additives of the type used in the polymer art. Examples of impact modifiers include, but are not limited to, core-shell particles and block or graft copolymers. Examples of additives include, for example, UV light inhibitors or stabilizers, lubricant agents, heat stabilizers, flame retardants, synergists, pigments and other coloring agents. Examples of fillers employed in a typical compounded polymer blend according to the present invention include talc, calcium carbonate, mica, matting agents, wollastonite, dolomite, glass fibers, boron fibers, carbon fibers, carbon blacks, pigments such as titanium dioxide, or mixtures thereof. Other polymer additives could include polycarbonates, polyurethanes, polysulfones, polyamides, polyolefin including copolymers and terpolymers based on these polymers, and including linear, branched, block, and grafted polymer structures. Examples of matting agents include, but are not limited to, cross-linked polymer particles of various geometries, The amount of filler and additives included in the polymer compositions of each layer may vary from about 0.01% to about 70% of the combined weight of polymer, additives and filler. Generally amounts from about 5% to about 45%, from about 10% to about 40%, are included.

The fillers may be treated with coupling agents to improve the bond between the fillers to the resin. For example, the fillers can be treated with materials such as fatty acids (e.g., stearic acid), silanes, maleated polypropylene, etc. The amount of coupling agent used is an amount effective to improve the bond between the fillers with the resin.
The components of the blend can be combined by means known in the art, including but not limited to dry blending, solvent blending, and melt blending in an extruder. Components A, B, and optionally C can be blended separately with one of the other components, then blended with the other component(s), or all components can be blended together in the same process.

In the multi-layer structure of the invention, the tie layer and polar polymer layers range in thickness from 0.025 to 2.5 mm, and preferably from 0.05 to 1 mm in thickness.

### Manufacture

The multilayer structures of the invention are produced by methods comprising co-extrusion techniques, lamination techniques, thermoforming, injection molding, blow molding, or any combination thereof.

In one embodiment, the multilayer structure of the invention is manufactured using a process including coextrusion. Coextrusion is a process in which two or more molten polymeric compositions are simultaneously extruded through a feedblock die or, alternatively, through a multi-manifold die, to form a laminar structure with different functional properties in each layer. A feedblock die can be used to feed a multi-manifold die in a single process, to provide excellent flexibility in the manufacture of the multilayer structures.

In another embodiment, the multilayer structure of the invention is manufactured using a process including lamination. Lamination is the process of bonding together prefabricated sheet or film layers, or prefabricated and extruded sheet or film layers, by the use of adhesives, or by a combination of heat and pressure. Alternatively, hot melt lamination or thermal lamination brings two or more molten polymer layers together outside the extrusion die, usually at a nip roll or at the top roll of a roll stack.

In another embodiment, the multilayer structure of the invention is manufactured using a process including injection molding. Injection molding processes suitable to the manufacture of the multilayer structures of the invention are selected from insert molding in which one or more layers is inserted into a mold and one or more additional layers is injected beside the inserted layer; multi-shot injection molding in which each layer material is injected into a mold sequentially with potential indexing of the mold for each layer; and co-injection molding in which all layer materials are injected sequentially into a fixed mold through the same gate or closely co-located gates so the materials shot first is distended by subsequent materials, balloon-like, to form a multilayer part.

The multilayered polymeric structure of the present invention may be either processed directly into any geometric shape, such as a profile, or may be first processed into a planar shape and then further shaped into a three-dimensional part by any suitable method. Thermoforming, for example, is the process of heating a plastic material in film or sheet form to its particular processing temperature and forming the hot and flexible material against the contours of a mold by mechanical or pneumatic means.

The multilayer structure can have any given geometry, including but not limited to, a flat sheet, a rod, or a profile. The multilayer structure exhibits excellent structural integrity, excellent surface appearance, high impact strength, high scratch resistance, and excellent resistance to UV radiation.

### EXAMPLES

Examples 1-4. A series of coextruded samples were prepared having a TPO substrate (Metaform 7200 from Mytex Polymers), an acrylic capstock (Solarkote H300 from Arkema Inc.), and different tie layers as described in the following Table 1. All tie-layers are commercially available with the exception of the developmental PRD940B. Tacryl^{™} 1080 is a styrenic copolymer while PRD940B is a methyl acrylate / ethylene copolymer. Modulus was measured by ASTM D638. Examples 2-4 are reference examples.

**TABLE 1**

| Example | Tie Layer | Manufacturer | Modulus (MPa) |
|---|---|---|---|
| 1 | TACRYL 1080 | Arkema Inc. | 593 |
| 2 | PRD940B | Arkema Inc. | 18 |
| 3 | TUFTEC M1911 | Asahi Kasei Chemicals Corp. | 20 |
| 4 | None | - | - |

Each example was prepared using three Davis Standard extruders, a 31,75cm (1.25") main extruder for the TPO substrate and two 1" satellite extruders for the capstock and tie layer. The extruders were connected to a triple manifold 0,3048m (12") sheet die. All melt temperatures were about 210°C. The sheet was polished by passing the sheet through a 0,3048m (12") diameter three-roll downstack. The approximate thickness of each layer was 300 micron (cap), 300 micron (tie), and 2.2mm (substrate).

Evaluation of each example was done in two ways. First, test specimens about 25 cm long and 2.5 cm wide were cut from each example sheet. A small section of the capstock was peeled away from the tie-layer. If this was not possible, then the capstock and tie-layer were peeled together away from the substrate. The difficulty of extending the peel by pulling the capstock away from the substrate was evaluated qualitatively from poor (little of no difficulty) to good (considerable force required). This largely tests the tensile strength of the adhesion between layers. To introduce more shear, the sample specimens were severely twisted at the ends in an effort to induce delamination. Again, the results were evaluated from poor (easy to delaminate) to good (difficult).

The following Table 2 summarizes the results

**TABLE 2**

| Example | Peel | Twist |
|---|---|---|
| 1 | Good | Good |
| 2 | Good | Poor |
| 3 | Good | Poor |
| 4 | Poor | Poor |

Of the materials tested, only the high-modulus Tacryl^{™} 1080 was judged "good" in both tests.

Sheet specimens from examples 1 and 2 above were also thermoformed into small parts using a lab-scale thermoformer. Samples of formed and unformed sheet were exposed to the following environmental cycling:

**TABLE 3**

| | |
|---|---|
| 85°C, 85% Humidity | 20 hours |
| -40°C, Humidity not controlled | 4 hours |

The samples were exposed to this cycling for a total of 7 days, after which the samples were evaluated for delamination.

**TABLE 4**

| Sample | Appearance |
|---|---|
| Example 1, unformed sheet | unchanged |
| Example 1, formed sheet | unchanged |
| Example 2, unformed sheet | unchanged |
| Example 2, formed sheet | Delamination of the capstock in areas of high stress |

The high modulus of Example 1 prevented creep followed by delamination in areas of high stress.

## Claims

1. A multi-layer thermoformable structure comprising:
a) at least one polyolefin-based layer,
b) at least one polar polymer-based layer, and
c) at least one tie layer having a thickness of from 0.025 to 2.5 mm, and having a tensile modulus, as measured by ASTM D638 (Type I dogbone), of greater than 300 MPa and preferably of greater than 500 MPa,
wherein said tie layer comprises a blend of a styrenic block copolymer with a styrenic polymer, and wherein said tie layer does not comprise a blend of a styrenic block copolymer with a vinyl cyanide-containing compound and
wherein the tie layer is directly adjacent to and adhering to, in between the polyolefin-based layer and the polar polymer-based layer; and wherein said polar polymer is selected from the group consisting of acrylic-based polymers, styrenic-based polymers, polyesters, polycarbonate, polyvinylidene fluoride, and thermoplastic polyurethane (TPU), and compatible mixtures thereof.

2. The multi-layer thermoformable structure of claim 1, wherein said polar polymer is an acrylic-based polymers.

3. The multi-layer thermoformable structure of claim 1, wherein said polyolefin- based layer is a thermoplastic polyolefin.

4. The multi-layer thermoformable structure of claim 1, wherein said styrenic polymer is selected from styrene-maleic anhydride copolymers (SMA), and styrene- (meth)acrylate copolymers such as styrene-methyl methacrylate.

5. A process for forming the multi-layer structure of claim 1, comprising the step of co-extruding, laminating, thermoforming, injection molding, or blow molding said polyolefin-based layer, said tie layer and said polar polymer layer together to form a multi-layer structure.

## Patentansprüche

1. Mehrschichtige thermoformbare Struktur, die Folgendes umfasst:
a) mindestens eine Schicht auf Basis eines Polyolefins,
b) mindestens eine Schicht auf Basis eines polaren Polymers, und
c) mindestens eine Bindeschicht mit einer Dicke von 0,025 bis 2,5 mm und mit einem Zugmodul, gemessen nach ASTM D638 (Typ I Dogbone), von mehr als 300 MPa und vorzugsweise von mehr als 500 MPa,
wobei die Bindeschicht eine Mischung aus einem Styrolblockcopolymer mit einem Styrolpolymer umfasst, und wobei die Bindeschicht keine Mischung eines Styrolblockcopolymers mit einer Vinylcyanid enthaltenden Verbindung umfasst und
wobei die Bindeschicht direkt an die Schicht auf Basis eines Polyolefins und die Schicht auf Basis des polaren Polymers angrenzt und daran haftet; und wobei das polare Polymer ausgewählt ist aus der Gruppe bestehend aus Polymeren auf Acrylbasis, Polymeren auf Styrolbasis, Polyestern, Polycarbonat, Polyvinylidenfluorid und thermoplastischem Polyurethan (TPU) und verträglichen Gemischen davon.

2. Mehrschichtige thermoformbare Struktur nach Anspruch 1, wobei das polare Polymer ein Polymer auf Acrylbasis ist.

3. Mehrschichtige thermoformbare Struktur nach Anspruch 1, wobei die Schicht auf Polyolefinbasis ein thermoplastisches Polyolefin ist.

4. Mehrschichtige thermoformbare Struktur nach Anspruch 1, wobei das Styrolpolymer ausgewählt ist aus Styrol-Maleinsäureanhydrid-Copolymeren (SMA) und Styrol-(Meth)acrylat-Copolymeren wie Styrol-Methylmethacrylat.

5. Verfahren zur Herstellung der mehrschichtigen Struktur nach Anspruch 1, das den folgenden Schritt umfasst: Coextrudieren, Laminieren, Thermoformen, Spritzgießen oder Blasformen der Schicht auf Polyolefinbasis, der Bindeschicht und der polaren Polymerschicht zur Bildung einer Mehrschichtstruktur.

## Revendications

1. Structure thermoformable multicouche, comprenant :
a) au moins une couche à base de polyoléfine,
b) au moins une couche à base de polymère polaire, et
c) au moins une couche de liaison ayant une épaisseur de 0,025 à 2,5 mm, et ayant un module de traction, tel que mesuré par ASTM D638 (haltère de Type I), de plus de 300 MPa et de préférence de plus de 500 MPa,
dans laquelle ladite couche de liaison comprend un mélange d'un copolymère bloc styrénique avec un polymère styrénique, et dans laquelle ladite couche de liaison ne comprend pas de mélange d'un copolymère bloc styrénique avec un composé contenant du cyanure de vinyle, et
dans laquelle la couche de liaison est directement adjacente à et collante à, entre la couche à base de polyoléfine et la couche à base de polymère polaire ; et dans laquelle ledit polymère polaire est sélectionné parmi le groupe constitué de polymères à base d'acrylique, de polymères à base styrénique, de polyesters, de polycarbonate, de fluorure de polyvinylidène, et de polyuréthane thermoplastique (TPU), et de mélanges compatibles de ceux-ci.

2. Structure thermoformable multicouche selon la revendication 1, dans laquelle ledit polymère polaire est un polymère à base d'acrylique.

3. Structure thermoformable multicouche selon la revendication 1, dans laquelle ladite couche à base de polyoléfine est une polyoléfine thermoplastique.

4. Structure thermoformable multicouche selon la revendication 1, dans laquelle ledit polymère styrénique est sélectionné parmi des copolymères styrène-anhydride maléique (SMA), et des copolymères styrène-(méth)acrylate tels que du styrène-méthacrylate de méthyle.

5. Procédé pour former la structure multicouche de la revendication 1, comprenant l'étape de la coextrusion, de la stratification, du thermoformage, du moulage par injection, ou du moulage par soufflage de ladite couche à base de polyoléfine, de ladite couche de liaison et de ladite couche de polymère polaire ensemble pour former une structure multicouche.
